# FASCICULE DE BREVET EUROPEEN

(11) **EP 2 548 806 B1**
(45) Date de publication et mention de la délivrance du brevet: **23.04.2014**
(21) Numéro de dépôt: 12175246.3
(22) Date de dépôt: 06.07.2012
(51) Int. Cl.: F16L 39/00, F16L 39/04, F16L 27/12, F16L 27/02

(54) **Dispositif de raccord anti-flambage pour tuyauteries**
Knickschutz Anschlussvorrichtung für Rohrsysteme
Anti-buckling connection device for pipes

(30) Priorité: 20.07.2011 FR 1156588
(43) Date de publication de la demande: 23.01.2013
(73) Titulaire: Airbus Operations S.A.S., 31060 Toulouse (FR)
(72) Inventeur: Courpet, Alexis, 31620 FRONTON (FR); Barre, Thomas, 31500 TOULOUSE (FR); Bourbon, Olivier, 82600 AUCAMVILLE (FR); Biteau, Matthieu, 31300 TOULOUSE (FR); Roques, Jean-Marc, 31300 TOULOUSE (FR); Sable, Cédric, 31300 TOULOUSE (FR); Escande, Sébastien, 31860 PINS-JUSTARET (FR)
(74) Mandataire: Gicquel, Olivier Yves Gérard

(56) Documents cités:
- EP-A1- 0 870 965
- EP-A2- 2 261 543
- JP-A- 2004 324 769

## Description

L'invention concerne un dispositif de raccord anti-flambage pour tuyauteries. L'invention est plus particulièrement, mais non exclusivement, adaptée à la réalisation de raccords destinés à la jonction de conduits dans un aéronef et plus particulièrement pour les tuyauteries de carburant constituées de conduits à double paroi.

Dans de nombreux véhicules, notamment les aéronefs, des tuyauteries rigides véhiculant différentes natures de fluides sont fixées à la structure dudit véhicule par des points d'ancrage. Avantageusement les raccords entre deux conduits de la tuyauterie sont placés au niveau de ces ancrages, de sorte que le poids desdits raccords soit repris par la structure du véhicule et non par la tuyauterie. Ainsi, lesdits raccords sont liés aux conduits selon une liaison gouttière, ou sphère cylindre, c'est-à-dire une liaison qui combine une liaison rotule et une liaison glissière selon l'axe longitudinal du conduit. Cette liaison permet d'encaisser les défauts d'alignement entre les conduits constituant la tuyauterie et les variations de distance entre les ancrages, ces variations ou ces défauts étant consécutifs :
- aux tolérances, tant de fabrication des conduits que de positionnement des ancrages dans la structure du véhicule, et
- aux déformations différentielles de la tuyauterie et de la structure lorsqu'elles sont soumises aux sollicitations de service du véhicule.

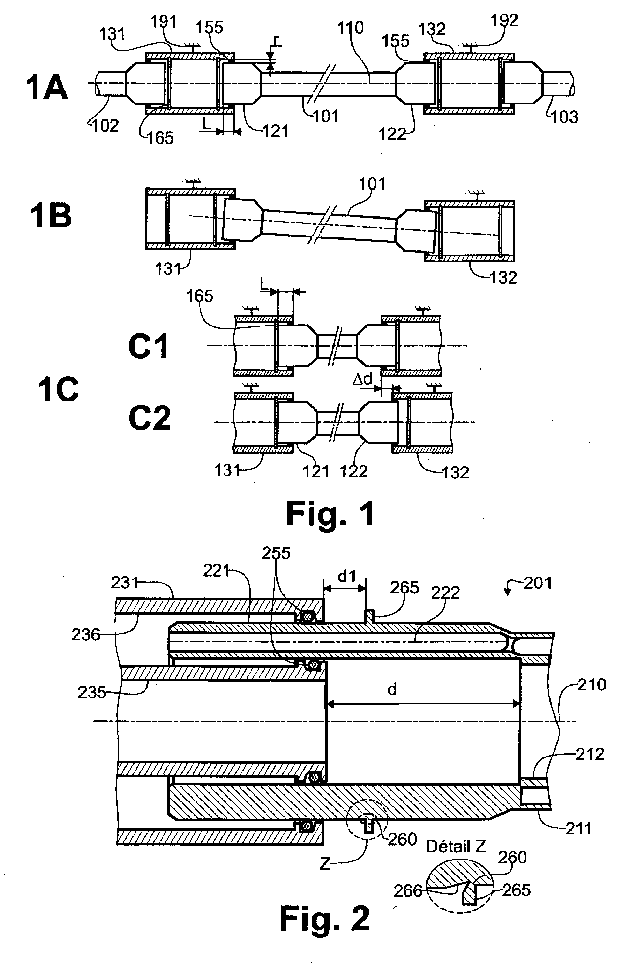

Ces degrés de liberté au niveau des raccords sont réalisés selon des amplitudes limitées de manière à ce que l'étanchéité soit toujours garantie et qu'il ne puisse pas y avoir de déboîtement des conduits ainsi assemblés. Le document EP 2261543 A2 divulgue un dispositif de raccordement d'un conduit selon le préambule de la revendication 1. Par ailleurs, la figure 1, relative à l'art antérieur, illustre schématiquement un assemblage de conduits. Comme le montre la figure 1A, selon cette représentation simplifiée, les conduits (101, 102, 103) constituant la tuyauterie sont des conduits droits, disposés selon un alignement (110) rectiligne de leurs axes. Chaque conduit comprend une jupe (121, 122) à chacune de ses extrémités. Ces jupes viennent s'insérer dans des raccords (131, 132) lesquels raccords sont fixés à une structure, par exemple le fuselage d'un aéronef, par des ancrages (191, 192). Chaque raccord comprend des moyens (155) d'étanchéité réalisant une liaison annulaire sensiblement élastique entre la jupe (121, 122) du conduit et l'alésage intérieur des raccords (131, 132). Le diamètre extérieur de la jupe (121) est plus faible que le diamètre intérieur du raccord (131) de sorte qu'en dehors du contact avec les moyens d'étanchéité (155), la jupe (121) présente un jeu radial (r) avec l'alésage intérieur du raccord (131). Ainsi, dans chaque raccord, la jupe de chaque conduit est en liaison rotule avec ledit conduit par l'intermédiaire du contact annulaire avec les moyens d'étanchéité (155) et l'élasticité de ces moyens. Comme montré sur la figure 1B, les degrés de libertés introduits par cette liaison rotule permettent un désalignement des raccords (131, 132) sans dommage et sans difficulté de montage du conduit (101). L'angle de désalignement autorisé dépend de la flexibilité des moyens d'étanchéité (155), du jeu radial (r) entre les jupes (121, 122) et les alésages des conduits (131, 132) et de la longueur (L) d'insertion de la jupe (121, 122) dans l'alésage du raccord (131, 132). Ainsi, pour un même angle de désalignement autorisé, le jeu radial (r) devra être d'autant plus important que la longueur (L) d'insertion de la jupe dans le raccord le sera.

Comme illustré sur la figure 1C, la longueur des jupes (121, 122) et leur longueur d'implantation (L) dans les raccords sont déterminées par la capacité de la liaison d'accommoder des variations de distance (Δd) entre les raccords (131, 132). Ces variations de distances proviennent des tolérances de positionnement des raccords dans la structure et des variations élastiques de distances entre les raccords, ces variations élastiques étant consécutives à la réponse de la structure aux sollicitations de services auxquelles elle est soumise. Les raccords (131, 132) comprennent des arrêts en translation (165) afin d'éviter que le cumul des déformations élastiques au cours du temps ne conduise à un déboîtement d'une extrémité du conduit du raccord. Ainsi, la distance d'implantation (L) des jupes (121, 122) dans les raccords est déterminée de la manière suivante :
- lorsque les deux raccords (131, 132) sont dans leur position relative la plus proche (figure C1) les deux jupes (121, 122) sont au contact des moyens (165) d'arrêt en translation ;
- lorsque les raccords (131, 132) sont dans leur position relative la plus éloignée (figure C2) l'une des jupes (121) est au contact de l'arrêt (165) en translation (165) dans son raccord respectif (131) alors que l'extrémité de l'autre jupe (122) est distante de l'arrêt en translation (165) dans son raccord respectif (132) d'une distance égale à la variation maximale (Δd) de distance entre les deux raccords tout en assurant toujours le contact avec les moyens d'étanchéité (155).

Ainsi, quelle que soit la position du conduit entre les deux raccords, il ne peut y avoir de déboîtement de celui-ci d'un des raccords et par suite, la distance d'implantation des jupes dans chaque raccord est égale à la variation de distance potentielle maximale (Δd) entre les ancrages (191, 192), augmentée, le cas échéant, d'un coefficient de sécurité et d'une marge pour tenir compte de l'influence cumulée du désalignement. La variation potentielle (Δd) de distance entre les raccords a trois origines :
i. les tolérances de fabrication des conduits, des raccords et de positionnement des ancrages portants les dits raccords ;
ii. les variations de distances élastiques entre les ancrages, consécutives aux sollicitations de services nominales de la structure ;
iii. et pour certaines tuyauteries, notamment les tuyauteries de carburant, les variations exceptionnelles de distance entre les ancrages.

Les variations exceptionnelles de distance se produisent dans des situations dites de crash. L'objectif est de conserver l'étanchéité de la tuyauterie dans ces conditions exceptionnelles afin d'éviter que le fluide qu'elles transportent ne se répande dans le véhicule. Ainsi, un rapprochement important des ancrages peut produire une compression du conduit, lequel est alors susceptible de se déformer en flambage et de se rompre. Ces distorsions exceptionnelles de la structure sont susceptibles de prendre des valeurs élevées, de sorte que leur prise en compte dans la longueur d'implantation des jupes selon le principe de l'art antérieur décrit ci-avant, toujours en évitant que le cumul des déformations élastiques n'entraîne un déboîtement des conduits, conduit à des longueurs de jupes et des longueurs d'implantation de ces jupes dans les raccords particulièrement importantes. Afin de conserver la capacité d'accommodation des désalignements, cette longueur d'implantation accrue nécessite une augmentation du jeu radial (r) des jupes dans les raccords. Ainsi, la prise en compte de ces contraintes exceptionnelles selon les principes de conception de l'art antérieur conduit à une augmentation très significative de la masse de la tuyauterie.

Afin de résoudre les inconvénients de l'art antérieur, l'invention propose un dispositif de raccordement d'un conduit comprenant :
- un conduit ;
- un raccord comportant des moyens pour réaliser une liaison glissière longitudinale étanche avec une extrémité du conduit selon une course totale d parallèlement à l'axe, dit longitudinal, dudit conduit ;
- des moyens d'arrêt en translation de la première extrémité du conduit dans le raccord pour une course d1 inférieure à d ;
- tel que lesdits moyens d'arrêt en translation sont escamotables pour des conditions de compression définies du conduit.

Ainsi, la course supplémentaire (d-d1), dite de sécurité, correspondant aux conditions de sollicitation exceptionnelles peut n'être placée qu'à une seule extrémité du conduit, sans nuire à la sécurité du dispositif tant en conditions nominales que dans ces conditions exceptionnelles.

Le terme « escamotable » signifie que les moyens d'arrêt en translation sont aptes à s'effacer et ainsi libérer ladite translation, par suite de la rétractation, de la rupture, du pliage, de la déchirure ou de la désintégration desdits moyens sans que cette liste ne soit exhaustive.

L'invention peut être mise en oeuvre selon les modes de réalisation avantageux, exposés ci-après, lesquels sont à considérer individuellement ou selon toute combinaison techniquement opérante, et conformément à la revendication 1.

Selon un premier mode de réalisation du dispositif objet de l'invention, les moyens d'arrêt en translation sont interposés entre le conduit et le raccord et sont escamotés par leur cisaillement selon une direction longitudinale sous l'effet d'une force déterminée par les risques de flambage du conduit. Ainsi les conditions dans lesquelles doit être déclenchée la translation supplémentaire du conduit dans le raccord sont aisément calibrées par la section de résistance au cisaillement desdits moyens.

Selon une première variante de ce premier mode de réalisation, les moyens d'arrêt en translation comportent une bague fixée par une interface circonférentielle, l'escamotage de ladite bague étant réalisé par le cisaillement de cette interface. Ainsi, la rupture de l'interface étant réalisée circonférentiellement, et selon un cisaillement longitudinal, elle n'introduit pas d'effets de flexion parasites dans ledit conduit.

Selon une deuxième variante du premier mode de réalisation du dispositif objet de l'invention, les moyens d'arrêt en translation comprennent des éléments, dits fusibles, s'étendant selon une direction radiale du conduit et sont compris dans un ensemble comprenant : rivet, goupille et pion. Ce mode de réalisation est économique.

Selon un deuxième mode de réalisation du dispositif objet de l'invention, les moyens d'arrêt en translation comprennent une entretoise s'étendant parallèlement à l'axe du conduit et dont l'escamotage est réalisé par le flambage de ladite entretoise sous l'effet d'une force déterminée par les risques de flambage du conduit. L'utilisation du flambage d'une entretoise permet de limiter l'effet de choc sur le conduit lors du déclenchement de la course de sécurité.

Avantageusement, les moyens d'arrêt en translation sont fixés sur la paroi externe dudit conduit à l'extérieur du raccord. Ainsi, une inspection visuelle desdits raccords révèle immédiatement que la course de sécurité du dispositif objet de l'invention a été déclenchée, témoin de l'occurrence d'une sollicitation anormale de la structure et d'un risque de dégradation de la tuyauterie.

Avantageusement, le raccord comprend des moyens d'étanchéité en contact avec une portée sur la paroi externe du conduit et les moyens d'arrêt en translation comprennent une bague apte à coulisser sur ladite portée de la paroi externe. Ainsi, l'escamotage des dits moyens ne dégrade pas l'étanchéité du conduit dans le raccord.

Selon ce dernier mode de réalisation, le conduit est de type à double paroi. Ainsi le dispositif objet de l'invention peut avantageusement être utilisé pour la connexion de tuyauteries de carburant dans le domaine aéronautique, l'étanchéité de la paroi externe par rapport au raccord étant conservée en cas de déclenchement de la course de sécurité.

Avantageusement, l'extrémité du conduit à double paroi pénétrant dans le raccord est constituée par une jupe en simple paroi, l'extrémité longitudinale de la paroi interne du conduit étant distante de l'extrémité longitudinale de la jupe introduite dans le raccord d'une distance supérieure ou égale à (d+d1). Ainsi la réalisation de l'étanchéité dans le raccord est réalisée à l'intérieur et à l'extérieur de la jupe ce qui simplifie le raccord et permet de conserver la liaison rotule.

Avantageusement, l'extrémité longitudinale de la paroi interne du conduit à double paroi est toujours distante de l'extrémité longitudinale du raccord côté conduit d'une longueur supérieure ou égale à (d-d1) lorsque les moyens d'arrêt en translation ne sont pas escamotés. Ainsi le déclenchement de la course de sécurité, quelle que soit la position longitudinale du conduit dans le raccord, ne risque pas de dégrader le conduit intérieur véhiculant le fluide et la sécurité de la double paroi est pleinement conservée, y compris dans les circonstances de sollicitation exceptionnelles.

L'invention est exposée ci-après selon ses modes de réalisation préférés, nullement limitatifs, et en référence aux figures 1 à 6 dans lesquelles :
- la figure 1, relative à l'art antérieur, montre selon une vue en coupe le principe des liaisons des conduits d'une tuyauterie ;
- la figure 2 représente un exemple de réalisation du dispositif objet de l'invention selon une vue partielle en coupe longitudinale, mettant en oeuvre un conduit et un raccord à double paroi ;
- la figure 3 illustre selon la même coupe que la figure 2, un autre exemple de réalisation du dispositif objet de l'invention ;
- la figure 4 est une vue en perspective des moyens d'arrêt en translation utilisés selon le mode de réalisation illustré figure 3 ;
- la figure 5 montre selon la même coupe que les figures 2 et 3, un autre exemple de réalisation du dispositif objet de l'invention ;
- et la figure 6 est une vue en perspective d'un exemple de réalisation du dispositif objet de l'invention selon le mode de réalisation de la figure 5.

Le dispositif objet de l'invention est représenté sur ces figures selon un mode de réalisation mettant en oeuvre une tuyauterie à double paroi. L'homme du métier adaptera, à la lumière de ces enseignements, la réalisation aux cas mettant en oeuvre des tuyauteries à simple paroi.

Comme illustré sur la figure 2, selon un exemple de réalisation, le conduit (201) à double paroi (211, 212) pénètre dans le raccord (231) par une jupe (221) en simple paroi, ladite paroi étant percée d'alésages (222) en communication avec l'espace entre les parois (211, 212) du conduit (201). Ledit conduit (201) s'étend selon un axe (210) longitudinal.

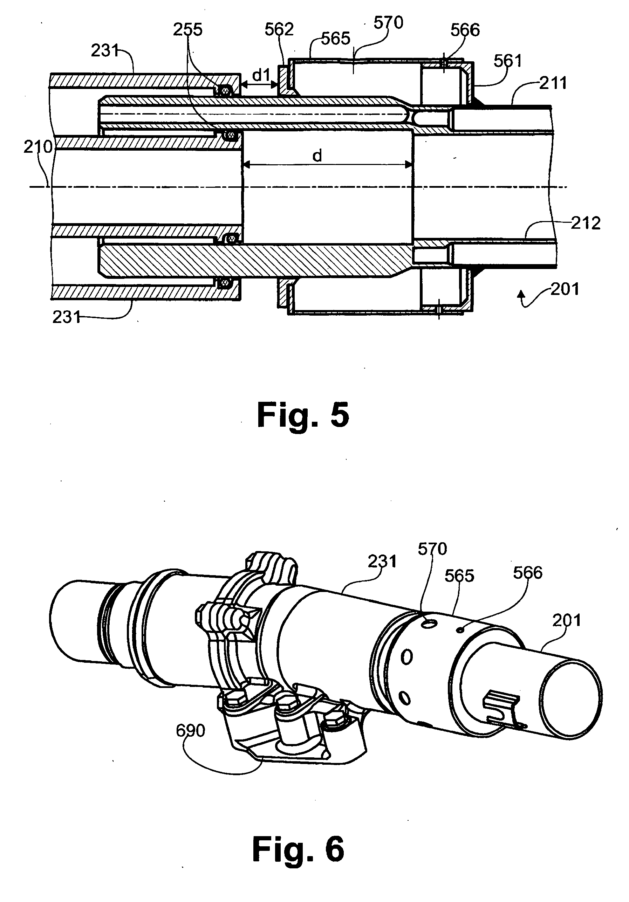

Comme le montre la figure 6, un ancrage (690) lie complètement le raccord (231) à une structure support (non représentée) par exemple au fuselage d'un aéronef.

En revenant à la figure 2, des joints (255), par exemple des joints toriques, réalisent l'étanchéité de part et d'autre de la paroi de la jupe (221) avec le raccord (231), le seul contact entre ledit raccord (231) et la jupe étant réalisé par l'intermédiaire de ces joints toriques, cette liaison autorise un mouvement de rotule de la jupe (221) dans le raccord (231).

Le raccord (231) comprend une paroi (235) intérieure délimitant un conduit en communication hydraulique avec le conduit intérieur délimité par la paroi (212) intérieure de la tuyauterie, et une paroi extérieure (236). L'espace compris entre la paroi extérieure (236) et la paroi intérieure (235) du raccord (231) est en communication hydraulique, par l'intermédiaire des alésages (222) de la jupe (221) avec l'espace formant conduit compris entre les parois (212, 211) intérieures et extérieures de la tuyauterie. Les joints (255) isolent également les conduits intérieurs et extérieurs de la tuyauterie à l'intérieur du raccord (231), de sorte que la continuité hydraulique séparée des conduits intérieurs et extérieurs de la tuyauterie est conservée au passage des raccords.

Selon cet exemple de réalisation, la course longitudinale maximale, parallèlement à l'axe (210), du conduit (201) dans le raccord (231) est déterminée par la distance (d) entre les extrémités des conduits intérieurs du raccord (231) et du conduit (201) de tuyauterie, insérée dans ce raccord. La longueur d'extension dudit raccord (231), parallèlement à l'axe longitudinal (210), est choisie de sorte qu'au cours d'une translation de cette longueur (d) l'extrémité de la jupe (221), introduite dans le raccord (231), ne rencontre aucun autre obstacle.

Ainsi, la longueur (d) prend en compte les trois sources de variation de positionnement des conduits de la tuyauterie par rapport aux points d'ancrage :
i. les tolérances de positionnement et de fabrication ;
ii. les déformations de la structure sur laquelle sont ancrés les raccords, déformations relatives aux sollicitations de service de ladite structure ;
iii. les déformations de la structure relatives aux sollicitations exceptionnelles.

Selon l'exemple de réalisation de l'invention, seule une extrémité du conduit (201) est connectée à un raccord (231) autorisant une course longitudinale dudit conduit dans le raccord d'une distance d. L'autre extrémité du conduit (201) est connectée à un raccord (non représenté) n'autorisant qu'une course de longueur d1, inférieure à d, et ne prenant pas en compte les déformations exceptionnelles. Ainsi, pour éviter un déboîtement du conduit (201) du raccord placé à son autre extrémité, sous l'effet du cumul de déplacements relatifs longitudinaux dudit conduit (201), le dispositif objet de l'invention comprend des moyens (265) pour limiter cette course longitudinale à une longueur d1. Ainsi en situations nominales, le conduit (201) se déplace longitudinalement dans le raccord (231) d'une course maximale égale à d1. La course de sécurité (d-d1), correspondant aux cas de sollicitation exceptionnelle, est obtenue par l'escamotage de ces moyens (265) d'arrêt en translation. Selon l'exemple de réalisation représenté sur la figure 2, les moyens (265) d'arrêt en translation sont fixés sur la jupe (221) par l'intermédiaire d'une interface (260) circonférentielle. La section de cette interface (260) est choisie de sorte qu'en cas de sollicitation exceptionnelle, les moyens (265) d'arrêt en translation rencontrant l'extrémité du conduit (231) se cisaillent selon cette interface (260) et libèrent ainsi la course supplémentaire (d-d1). Selon ce mode de réalisation, des moyens d'arrêt en translation (265) peuvent être rapportés sur la surface de la jupe (221) par exemple par soudage ou faire partie intégrante de la jupe (221). Qu'ils soit rapportés ou intégrés à la jupe (221) lesdits moyens (265) d'arrêt en translation peuvent s'escamoter par rupture en cisaillement de l'interface (260) avec la jupe ou par pliage selon cette interface. Avantageusement, comme illustré sur le détail Z de la figure 2, un usinage formant amorce de rupture ou de pliage peut être réalisé de sorte qu'au cours de sa rupture ou de son pliage, cet arrêt (265) n'entraine par une distorsion de la forme de la jupe (221) qui empêcherait son glissement dans le raccord (231).

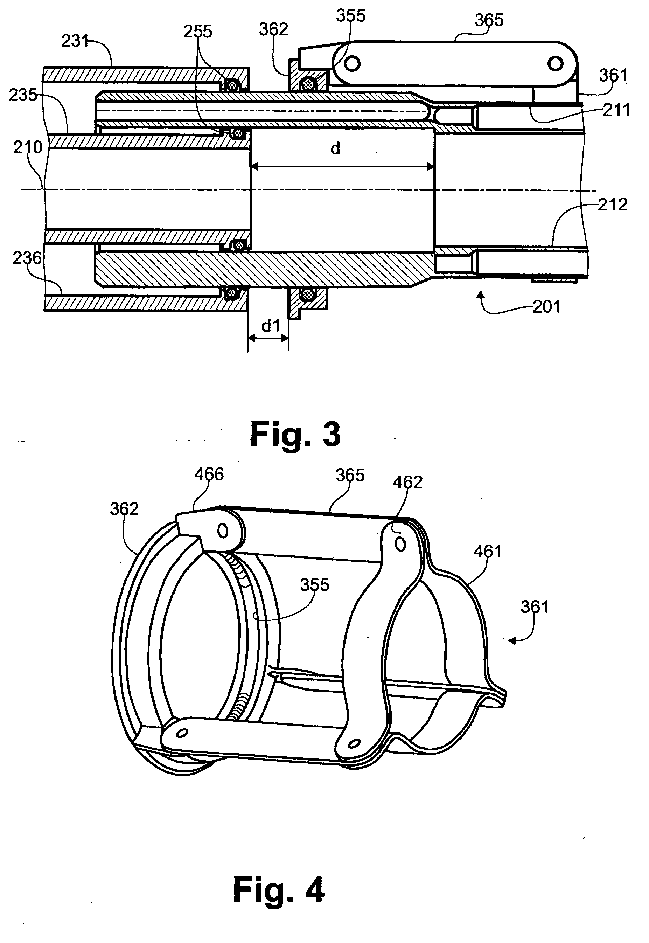

Comme illustré sur la figure 3, selon un autre mode de réalisation, les moyens escamotables de limitation de la course de la jupe (221) dans le raccord (231) à une valeur de d1 comprennent un support (361) soudé sur la paroi externe (211) à l'extérieur du conduit (201) pénétrant dans le raccord (231).

Comme le montre la figure 4, ledit support (361) comprend une bague (461), portant des oreilles (462) s'étendant radialement. Des entretoises (365), sous la forme de lames s'étendant parallèlement à la direction longitudinale, sont liées à chacune de ces oreilles (462) par une liaison pivot d'axe perpendiculaire à la direction longitudinale. L'autre extrémité des entretoises (365) est liée à une bague support (362), laquelle bague support comprend également des oreilles (466) supportant des moyens de liaison pivot avec l'extrémité de l'entretoise.

En revenant à la figure 3, la bague support (362) est centrée sur la jupe (221) du conduit à l'extérieur du raccord, en liaison glissière d'axe longitudinal (210) avec ladite jupe, de sorte que la distance maximale entre ladite bague support (362) et l'extrémité du raccord (231) soit égale à d1. Ainsi, en fonctionnement nominal, le débattement du conduit (201) dans le raccord (231) est limité à cette course d1 par la position de la bague support (362). En cas de sollicitation exceptionnelle, la section des entretoises (365) et leur nombre sont calculés de telle sorte que les dites entretoises se déforment en flambage. Contrairement au mode de réalisation précédent, figure 2, où un pic d'effort est nécessaire pour le cisaillement de l'arrêt en translation et où la course de la jupe (221) dans le raccord (231) se déroule ensuite librement, le flambage des entretoises (365) oppose un effort quasi constant à la pénétration de la jupe (221) dans le raccord (231) le long de la course de sécurité (d-d1).

Comme le montre la figure 3, ce mode de réalisation présente également l'avantage de ne pas dégrader la portée de la jupe en contact avec les joints (255) même en cas de déclenchement de la course de sécurité. En effet, le contact entre la bague (362) et la surface extérieure de la jupe (221) peut être réalisé par une pièce de faible dureté (355) en évitant ainsi tout risque de marquage. Selon cet exemple de réalisation, figure 3, cette pièce de faible - dureté est constituée par un jonc (355) placé dans un logement de la bague (362). Ledit jonc peut être avantageusement constitué de polytétrafluoroéthylène ou de toute autre matière dont les caractéristiques de frottement sont adaptées.

Comme illustré sur la figure 5, selon un autre exemple de réalisation, les moyens d'arrêt en translation du conduit (201) dans le raccord (231) comprennent une première entretoise (561) cylindrique soudée à l'extérieur du conduit (201) sur sa paroi externe (211). Cette première entretoise (561) s'emboîte longitudinalement dans une seconde entretoise (565) cylindrique de diamètre plus élevé. Les deux entretoises (561, 562) sont liées complètement l'une à l'autre par des éléments de fixation (566), dits fusibles, tels que des pions, goupilles ou rivets s'étendant radialement entre les deux entretoises. L'extrémité opposée à cette liaison de la seconde entretoise (565) est susceptible de venir en butée sur l'extrémité du raccord (231) et ainsi de limiter la course du conduit (201) dans ledit raccord (231) à une valeur d1. Avantageusement, cette extrémité de la seconde entretoise (565) est centrée sur la jupe (221) du conduit par une bague (561) constituée d'un matériau, tel que du polytétrafluoroéthylène (PTFE), dont le frottement sur la jupe (221) n'est pas susceptible de dégrader la portée des joints (255) réalisant l'étanchéité de la connexion avec le raccord (231).

La section des éléments de fixation (566) fusibles entre les deux entretoises (561, 565) est calculée de telle sorte que lesdits éléments (566) se rompent par cisaillement dans des conditions correspondant aux conditions de sollicitation exceptionnelle, justifiant le déclenchement de la course de sécurité (d-d1), autorisant ainsi le déplacement longitudinal relatif des deux entretoises (561,565).

Avantageusement, des perçages radiaux (570) pratiqués dans la deuxième entretoise (565) permettent d'éviter une accumulation d'eau de condensation dans l'espace compris entre ladite entretoise et la paroi externe du conduit (201).

La description ci-avant et les exemples de réalisation montrent que l'invention atteint les objectifs visés, en particulier elle permet de ménager une course de sécurité dans un raccord à une seule des extrémités d'un conduit, sans risquer de déboîtement dudit conduit du raccord de l'autre extrémité. Ainsi la masse ajoutée relative à l'introduction de cette course de sécurité est réduite en regard des solutions connues de l'art antérieur.

## Revendications

1. Dispositif de raccordement d'un conduit (201), comprenant :
- un conduit (201),
- un raccord (231) comportant des moyens (255) pour réaliser une liaison glissière longitudinale étanche avec une extrémité du conduit (201) selon une course totale (d) parallèlement à l'axe (210), dit longitudinal, dudit conduit (201);
- des moyens (265, 565, 365) d'arrêt en translation de la première extrémité du conduit (201) dans le raccord (231) pour une course (d1) inférieure à (d);
**caractérisé en ce que** lesdits moyens (265, 365, 565) d'arrêt en translation sont escamotables pour des conditions de compression définies du conduit (201).

2. Dispositif selon la revendication 1, **caractérisé en ce que** les moyens d'arrêt en translation (265, 565) sont interposés entre le conduit et le raccord et escamotés par leur cisaillement selon une direction longitudinale (210) sous l'effet d'une force déterminée par les risques de flambage du conduit (201).

3. Dispositif selon la revendication 2, **caractérisé en ce que** les moyens d'arrêt en translation comportent une bague (265) fixée par une interface (260) circonférentielle, l'escamotage de ladite bague étant réalisé par le cisaillement de cette interface (260).

4. Dispositif selon la revendication 2, **caractérisé en ce que** les moyens d'arrêt en translation comprennent des éléments (566), dits fusibles, s'entendant selon une direction radiale du conduit (201) et sont compris dans un ensemble comprenant : rivet, goupille et pion.

5. Dispositif selon la revendication 1, **caractérisé en ce que** les moyens d'arrêt en translation comprennent une entretoise (365) s'étendant parallèlement à l'axe du conduit et dont l'escamotage est réalisé par le flambage de ladite entretoise (365) sous l'effet d'une force déterminée par les risques de flambage du conduit.

6. Dispositif selon la revendication 1, **caractérisé en ce que** les moyens d'arrêt en translation (265, 361, 561) sont fixés sur une paroi (211) externe dudit conduit à l'extérieur du raccord (231).

7. Dispositif selon la revendication 6, **caractérisé en ce que** le raccord (231) comprend des moyens (255) d'étanchéité en contact avec une portée sur la paroi externe du conduit (201) et que les moyens d'arrêt en translation comprennent une bague (362, 562) apte à coulisser sur ladite portée de la paroi externe.

8. Dispositif selon la revendication 7, **caractérisé en ce que** le conduit (201) est de type à double paroi (211,212).

9. Dispositif selon la revendication 8, **caractérisé en ce que** l'extrémité du conduit (201) pénétrant dans le raccord (231) est constituée par une jupe (221) en simple paroi, l'extrémité longitudinale de la paroi interne (212) du conduit étant distante de l'extrémité longitudinale de la jupe (221) introduite dans le raccord (231) d'une distance supérieure ou égale à (d+d1).

10. Dispositif selon la revendication 9, **caractérisé en ce que** l'extrémité longitudinale de la paroi interne (212) du conduit (201) est toujours distante de l'extrémité longitudinale du raccord (231) côté conduit d'une longueur supérieure ou égale à (d-d1) lorsque les moyens d'arrêt en translation ne sont pas escamotés.

## Patentansprüche

1. Anschlussvorrichtung für eine Rohrleitung (201), umfassend:
- eine Rohrleitung (201),
- einen Anschluss (231), umfassend Mittel (255) zur Herstellung einer dichten Längsgleitverbindung mit einem Ende der Rohrleitung (201) entlang eines Gesamtweges (d) parallel zur so genannten Längsachse (210) der Rohrleitung (201);
- Mittel (265, 565, 365) zum Anhalten in Translation des ersten Endes der Rohrleitung (201) in dem Anschluss (231) für einen Weg (d1) kleiner als (d);
**dadurch gekennzeichnet, dass** die Mittel (265, 365, 565) zum Anhalten in Translation für definierte Kompressionsbedingungen der Rohrleitung (201) einziehbar sind.

2. Vorrichtung nach Anspruch 1, **dadurch gekennzeichnet, dass** die Mittel (265, 565) zum Anhalten in Translation zwischen der Rohrleitung und dem Anschluss angeordnet und durch ihre Scherbewegung entlang einer Längsrichtung (210) unter der Wirkung einer Kraft, die durch die Knickgefahren der Rohrleitung (201) bestimmt wird, eingezogen werden.

3. Vorrichtung nach Anspruch 2, **dadurch gekennzeichnet, dass** die Mittel zum Anhalten in Translation einen Ring (265) umfassen, der durch eine Umfangsschnittstelle (260) befestigt ist, wobei das Einziehen des Ringes durch die Scherbewegung dieser Schnittstelle (260) erfolgt.

4. Vorrichtung nach Anspruch 2, **dadurch gekennzeichnet, dass** die Mittel zum Anhalten in Translation so genannte Schmelzelemente (566) umfassen, die sich in eine Radialrichtung der Rohrleitung (201) erstrecken und in einer Einheit enthalten sind, umfassend: Niet, Zapfen und Stift.

5. Vorrichtung nach Anspruch 1, **dadurch gekennzeichnet, dass** die Mittel zum Anhalten in Translation eine Querstrebe (365) umfassen, die sich parallel zur Achse der Rohrleitung erstreckt, und deren Einziehen durch das Knicken der Querstrebe (365) unter der Wirkung einer Kraft, die durch die Knickgefahren der Rohrleitung bestimmt wird, erfolgt.

6. Vorrichtung nach Anspruch 1, **dadurch gekennzeichnet, dass** die Mittel zum Anhalten in Translation (265, 361, 561) an einer Außenwand (211) der Rohrleitung außerhalb des Anschlusses (231) befestigt sind.

7. Vorrichtung nach Anspruch 6, **dadurch gekennzeichnet, dass** der Anschluss (231) Abdichtungsmittel (255) umfasst, die mit einer Fläche auf der Außenwand der Rohrleitung (201) in Kontakt sind, und dass die Mittel zum Anhalten in Translation einen Ring (362, 562) umfassen, der geeignet ist, auf der Fläche der Außenwand zu gleiten.

8. Vorrichtung nach Anspruch 7, **dadurch gekennzeichnet, dass** die Rohrleitung (201) vom Typ mit doppelter Wand (211, 212) ist.

9. Vorrichtung nach Anspruch 8, **dadurch gekennzeichnet, dass** das Ende der Rohrleitung (201), das in den Anschluss (231) eindringt, von einer einwandigen Schürze (221) gebildet ist, wobei das Längsende der Innenwand (212) der Rohrleitung von dem Längsende der Schürze (221), die in den Anschluss (231) eingeführt wird, um eine Distanz größer oder gleich (d+d1) entfernt ist.

10. Vorrichtung nach Anspruch 9, **dadurch gekennzeichnet, dass** das Längsende der Innenwand (212) der Rohrleitung (201) immer von dem Längsende des Anschlusses (231) auf der Seite der Rohrleitung um eine Länge größer oder gleich (d-d1) entfernt ist, wenn die Mittel zum Anhalten in Translation nicht eingezogen sind.

## Claims

1. Coupling device for a duct (201), comprising
- a duct (201),
- a coupling (231) comprising means (255) for producing a sealed longitudinal sliding connection with an end of the duct (201) along a total travel (d) parallel to the axis (210), termed longitudinal axis, of the said duct (201);
- means (265, 565, 365) for stopping the translational movement of the first end of the duct (201) in the coupling (231) for a travel (d1) less than (d);
**characterized in that** the said translational movement stopping means (265, 365, 565) are retractable for defined compression conditions of the duct (201).

2. Device according to Claim 1, **characterized in that** the translational movement stopping means (265, 565) are interposed between the duct and the coupling and retracted by their shearing in a longitudinal direction (210) under the effect of a force determined by the risks of buckling of the duct (201).

3. Device according to Claim 2, **characterized in that** the translational movement stopping means comprise a ring (265) fixed by a circumferential interface (260), the retraction of the said ring being produced by the shearing of this interface (260).

4. Device according to Claim 2, **characterized in that** the translational movement stopping means comprise elements (566), termed fusible elements, extending in a radial direction of the duct (201) and are comprised in an assembly comprising: rivet, pin and rod.

5. Device according to Claim 1, **characterized in that** the translational movement stopping means comprise a spacer (365) extending parallel to the axis of the duct and of which the retraction is produced by the buckling of the said spacer (365) under the effect of a force determined by the risks of buckling of the duct.

6. Device according to Claim 1, **characterized in that** the translational movement stopping means (265, 361, 561) are fixed on an outer wall (211) of the said duct outside the coupling (231).

7. Device according to Claim 6, **characterized in that** the coupling (231) comprises sealing means (255) in contact with a bearing surface on the outer wall of the duct (201) and **in that** the translational movement stopping means comprise a ring (362, 562) capable of sliding on the said bearing surface of the outer wall.

8. Device according to Claim 7, **characterized in that** the duct (201) is of the double-wall (211, 212) type.

9. Device according to Claim 8, **characterized in that** the end of the duct (201) penetrating into the coupling (231) consists of a single-wall skirt (221), the longitudinal end of the inner wall (212) of the duct being distant from the longitudinal end of the skirt (221) introduced into the coupling (231) by a distance greater than or equal to (d+d1).

10. Device according to Claim 9, **characterized in that** the longitudinal end of the inner wall (212) of the duct (201) is always distant from the longitudinal end of the coupling (231) on the duct side by a length greater than or equal to (d-d1) when the translational movement stopping means are not retracted.
